# EUROPÄISCHE PATENTSCHRIFT

(11) **EP 3 272 187 B1**
(45) Veröffentlichungstag und Bekanntmachung des Hinweises auf die Patenterteilung: **22.08.2018**
(21) Anmeldenummer: 17727791.0
(22) Anmeldetag: 30.03.2017
(51) Int. Cl.: H05B 7/09

(54) **ELEKTRODENMASSE**
ELECTRODE COMPOSITION
COMPOSITION POUR ÉLECTRODES

(30) Priorität: 31.03.2016 EP 16163213
(43) Veröffentlichungstag der Anmeldung: 24.01.2018
(73) Patentinhaber: Rheinfelden Carbon GmbH & Co. KG, 79618 Rheinfelden (DE)
(72) Erfinder: FRANKE, Alois J., 79618 Rheinfelden (DE); BECKER, Robert, 79618 Rheinfelden (DE); LEYE, Johann, 79618 Rheinfelden (DE)
(74) Vertreter: Rentsch Partner AG
(86) Internationale Anmeldenummer: PCT/EP2017/057507
(87) Internationale Veröffentlichungsnummer: WO 2017/167859

(56) Entgegenhaltungen:
- EP-A1- 0 155 230
- CN-A- 1 047 006
- CN-A- 101 922 021
- CN-A- 101 928 962

## Beschreibung

### TECHNISCHES GEBIET

Die Erfindung betrifft eine bitumengebundene selbstkalzinierende Elektrodenmasse für Söderbergelektroden eines Elektrolichtbogenofens und eine aus der selbstkalzinierenden Elektrodenmasse hergestellte gebackene Elektrode.

### STAND DER TECHNIK

Die Technologie der Söderbergelektroden geht auf den Beginn des 20 Jahrhunderts zurück. Primär kommt diese Elektrodentechnologie im Bereich der Aluminiumschmelzflusselektrolyse und als Söderbergelektrode im Elektrolichtbogenofen, beispielsweise beim Schmelz-Reduktionsofen zum Einsatz.

Unter dem Begriff Söderbergelektrode sind selbstbackende bzw. selbstkalzinierende Elektroden mit folgendem technischen Prinzip zu verstehen: Eine Elektrodenmasse (fest bei Raumtemperatur) umfassend Kohlenstoffträger wie Anthrazit, Petrolkoks, Graphit und einem Steinkohleteerpechbinder schmilzt durch Prozesswärme bei 120 - 200°C auf und bildet eine flüssige bis pastöse Masse, welche den Blechmantel und alle Hohlräume der Leitbleche ausfüllt. Ab etwa 500°C geht die Elektrodenmasse in den festen Zustand über und ihr elektrischer Widerstandswert nimmt ab. Der aus dem Bindemittel gebildete Koks liegt in amorpher Form vor. Bei Temperaturen von grösser 1800°C setzt die Graphitierung der kompletten Elektrode ein.

Die Söderbergelektrode für Schmelz-Reduktionsöfen umfasst einen Blechmantel, wobei auf der Innenseite des Blechmantels Rippen (sogenannte Leitbleche) angeordnet sind. Der Blechmantel wird kontinuierlich mit Elektrodenmasse, beispielsweise in Form von Briketts oder in Form von Blöcken oder Zylindern, befüllt. Um die Elektrode während des Betriebs zu verlängern, werden weitere Blechmäntel angeschweisst. Bei der Söderbergelektrode für Schmelz-Reduktionsöfen zur Herstellung von Siliziummetallen handelt es sich um eine Spezialform der Söderbergelektrode ohne Leitbleche, bei welcher innerhalb der Elektrodenmasse eine Graphitelektrode geführt wird, sogenannte ELSA oder Composite Elektroden. Der Energieeintrag, welcher aus der Elektrodenmasse die gebackene und elektrisch leitfähige Elektrode entstehen lässt, resultiert zum einen aus der Prozesswärme des Ofens und zum anderen aus dem Stromdurchgang, welcher über die Kontaktbacken in die Elektrode eingeleitet wird.

In fast allen am Markt erhältlichen Elektrodenmassen für Söderbergelektroden für Elektrolichtbogenöfen, wird Steinkohleteerpech als Bindemittel verwendet, da dieses einen hohen Koksrückstand mit exzellenten Binderkokseigenschaften aufweist. Steinkohleteerpech hat sich trotz seiner hohen Gehalte an potentiell gesundheitsschädlichen polycyclischen aromatischen Kohlenwasserstoffen durchgesetzt. Alle Versuche, ungiftige Bindemittel zu verwenden sind bis dato gescheitert.

Mit dem Hintergrund Steinkohleteerpech als Bindemittel zu ersetzen, wurde Mitte der 1980er Jahre der Einsatz von Bitumen im Bereich selbstkalzinierender Anoden für die Aluminiumschmelzflusselektrolyse näher untersucht. Im Gegensatz zu Steinkohleteerpech enthält Bitumen polycyclische aromatische Kohlenwasserstoffe in nur ausserordentlich kleiner, für die Gesundheit nicht schädlicher Konzentration. In der EP01 55230A1 wird hierzu eine Elektrodenmasse für selbstkalzinierende Elektroden vorgeschlagen, welche neben den üblichen Bestandteilen Anthrazit, Graphit, Petrolkoks und Pechkoks als Bindemittel notwendigerweise eine Mischung aus 70-90 Gew. % Hartbitumen und 10-30 Gew. % aus Weichbitumen vorsieht. In der EP0155230A1 wird ausdrücklich darauf verwiesen, dass sich weder Weichbitumen noch Hartbitumen alleine als Bindemittel für die Kohlstoffmasse eignet. Die Verwendung von Hartbitumen und Weichbitumen alleine wurde als unzweckmässig beurteilt.

Unter Hartbitumen ist ein Bitumen mit einem Erweichungspunkt nach Ring und Kugel von etwa 80-110°C, als Weichbitumen eines von etwa 40-65°C zu verstehen, wobei die Dichte der beiden Bitumensorten nicht über 1,1 g/cm³(bei 25°C) liegt. Wie in der EP0155230A1 erwähnt, wird Bitumen aufgrund seines geringen Koksrückstands von etwa 38 Gew. % im Gegensatz zu Steinkohleteerpech, welches etwa 50-60 Gew. % aufweist, eigentlich als ungeeignetes Bindemittel für selbstkalzinierende Elektroden angesehen. Neben dem geringen Koksrückstand verfügt das Bitumen verglichen mit dem Steinkohleteerpech über einen hohen Anteil an flüchtigen Bestandteilen. Bei der Aluminiumschmelzflusselektrolyse wird Aluminiumoxid in schmelzflüssigem Kryolith gelöst und bei Temperaturen von rund 960°C in einer Elektrolysezelle zu metallischem Aluminium umgesetzt. Die Elektrolyse wird in Stahlwannen mit Kohlenstoffauskleidung durchgeführt, deren Boden gleichzeitig die Kathode darstellt. In der Wanne befinden sich der Elektrolyt und das schmelzflüssige Aluminium. Beim Einsatz der selbstkalzinierenden bzw. selbstbackenden Anoden wird Strom über vertikale oder horizontale Stromstangen zugeführt. Die Anode taucht in den Elektrolyten ein. Bei der genannten Prozesstemperatur entweichen die flüchtigen Bestandteile, insbesondere die des eingesetzten Bindemittels. Die gebackene Anode zeichnet sich daher durch einen porösen Kohlenstoffkörper aus, welcher in das Elektrolysebad eintaucht. In der Praxis konnte festgestellt werden, dass sich die Anode mit flüssigem Elektrolyten vollsaugt und dadurch gasdicht verschlossen wird. Das zwangsläufige Entweichen der flüchtigen Bestandteile durch die geschmolzene Masse erhöht die Porosität weiter. Die Anoden wurden mechanisch instabil und fielen von den Stromstangen ab. Die Versuche, Steinkohleteerpech als Binder bei Söderberganoden zu ersetzen, wurden nicht weiterverfolgt.

### DARSTELLUNG DER ERFINDUNG

Aufgabe der vorliegenden Erfindung ist es, eine selbstkalzinierende Elektrodenmasse für den Elektrolichtbogenofen zu entwickeln, welche die Nachteile bekannter selbstkalzinierender Elektrodenmassen nicht aufweist.

Erfindungsgemäß wird die Aufgabe gelöst durch eine selbstkalzinierende Elektrodenmasse gemäss Anspruch 1 sowie durch ein Verfahren gemäss Anspruch 13.

Ferner wird in Anspruch 12 eine aus der erfindungsgemässen selbstkalzinierenden Elektrodenmasse hergestellte gebackene Elektrode beansprucht.

Ist im Folgenden von Elektrodenmasse für Söderbergelektroden die Rede, umfasst dies Söderbergelektroden mit und ohne Graphitkern.

Unter "Elektrodenmasse" versteht man die Masse aus Bindemittel und Kohlenstoffkomponenten und optionalen Additiven, die am Ende des Misch- und Knetprozesses in eine für die vorgesehene Anwendung geeignete Form von unterschiedlicher Grösse, z.B. Briketts und Zylinder, geformt bzw. gegossen oder geschnitten wurde.

Unter gebackener Elektrode ist die Elektrode im bereits festen Zustand zu verstehen, welche ab der sogenannten Backzone und in Zonen unterhalb dieser Backzone entsteht. Dieser feste Zustand tritt ein, wenn die ursprünglich feste in einem dosierbaren Ausgangsmaterial (Briketts und Zylinder) vorhandene Elektrodenmasse, zunächst in eine pastöse Masse und im Anschluss in eine feste, sprich gebackene, Elektrode umgewandelt wird.

Unter dem in dieser Schrift verwendeten Begriff "Bitumen" ist ein bei der Aufarbeitung von Rohöl gewonnenes schwerflüchtiges Gemisch verschiedener organischer Substanzen zu verstehen, dessen viskoelastisches Verhalten sich mit der Temperatur ändert (siehe auch z.B. Römpp Chemie Lexikon, 9. Korrigierte Auflage, Georg Thieme Verlag, Stuttgart, New York und insbesondere in der DIN 55946).

Für die erfindungsgemäße Anwendung geeignetes Bitumen ist ausschliesslich Hartbitumen, das durch zusätzliche Flashdestillation von weichen und mittelharten Bitumenprodukten gewonnen wird und sich durch eine harte bis springharte Konsistenz auszeichnet. Die Weich- und mittelharten Bitumen werden ihrerseits als Rückstand einer ersten unter atmosphärischem Druck durchgeführten Destillation gewonnen. Die zwei aufeinanderfolgenden Destillationsschritte werden auch zweistufige Destillation genannt.

Unter dem für die vorliegende Anwendung verwendeten Begriff "Flashdestillation" (auch Hochvakuumdestillation genannt) versteht man den zusätzlichen Bearbeitungsschritt von Weich- und mittelhartem Bitumen der unter Vakuum (z.B. 2 bis 120 mm Hg) und erhöhter Temperatur (z.B. 310 bis 370°C) durchgeführt wird.

Insbesondere bevorzugt für die vorliegende Anwendung ist Hartbitumen, das sich durch einen hohen Schwefelgehalt, vorzugsweise von 5-7% auszeichnet und aus einem Rohöl mit einem hohen Gehalt von organisch gebundenem Schwefel gewonnen wird.

Ferner weist dieses für die Erfindung geeignete Hartbitumen einen Koksrückstand von 25-45% auf.

Die Anmelder haben überraschend gefunden, dass die spezifischen Eigenschaften der gemäss nach obigen Selektionskriterien gewonnene Hartbitumen für selbstkalzinierende Elektrodenmassen und gebackenen Elektroden aus diesen selbstkalzinierenden Elektrodenmassen in synergistischer Weise wirkten und ein ausgezeichnetes Bindemittel für Lichtbogenöfen sind.

Aufgrund des höheren Anteils an flüchtigen Bestandteilen in dem für die Erfindung geeigneten Hartbitumen, verglichen mit konventionellen steinkohleteerpechgebundenen Massen, resultiert eine gebackene Elektrode, die eine deutlich höhere Porosität aufweist als eine gebackene Elektrode, die Steinkohleteerpech als Binder enthält. Die mechanischen Eigenschaften hinsichtlich der Biegefestigkeit, der Druckfestigkeit und des statischen sowie dynamischen E-Moduls fallen geringer aus als bei der konventionellen steinkohleteerpechgebundenen Elektroden. Die hohe Porosität der gebackenen Elektrode erleichtert die Abführung der flüchtigen Gase in den Ofenraum des Elektrolichtbogenofens. Durch Crackprozesse am heißen Elektrodenkohlenstoff (1000 - 1500°) wird ein Teil der flüchtigen Bestandteile in binderwirksamen Kohlenstoff umgewandelt. Der hohe Schwefelgehalt des Hartbitumens fördert die Vernetzung dieses Binderkohlenstoffs und verbessert die Elastizität der Elektrode. Die höhere Elastizität kompensiert die Verringerung der mechanischen Festigkeit.

Die im Anschluss an das Backen folgende Graphitierung der Elektrode tritt rascher und bereits in einer Zone kurz unterhalb der Kontaktbacken auf.

Das für die vorliegende selbstkalzinierende Elektrodenmasse (sowie das vorliegende Verfahren) geeignete Hartbitumen wird vorzugsweise anhand einer durch die zusätzliche Flashdestillation erworbenen (für die vorliegende Anwendung günstigen) Eigenschaften, wie Erweichungstemperatur, Nadelpenetration und/oder Dichte charakterisiert.

Besonders geeignet ist somit Hartbitumen mit:
(i) einer Nadelpenetration bei 25°C nach DIN EN 1426 von < 50 [pro 0.1 mm], wie beispielsweise zwischen 0 bis 35 [pro 0.1 mm], insbesondere 0 bis 20 [pro 0.1 mm], vorzugsweise 0 bis 6 [pro 0.1mm] und/oder
(ii) einem Erweichungspunkt (Ring und Kugel) nach DIN EN 1427 von mindestens 65°C beispielsweise 65°C bis 160 °C, insbesondere 80 bis 110°C, vorzugsweise 85 bis 100°C; und/oder
(iii) einer Dichte bei 25°C nach DIN EN 52004 von 0.5 bis 2 g/cm³, bevorzugt 1.0 bis 1.2g/cm³.

Gemäss einer Ausführungsform hat das Hartbitumen die Penetrationssorten 30/45 bzw. 20/30 (nach DIN EN 12591) bzw. 10/15 (nach DIN EN 13305).

Besonders bevorzugt wird Hartbitumen, das sich durch eine Kombination von Nadelpenetration bei 25°C nach DIN EN 1426 zwischen 0 bis 6 [pro 0.1 mm] und/oder einem Erweichungspunkt (Ring und Kugel) nach DIN EN 1427 von 85 bis 100°C und/oder einer Dichte bei 25°C nach DIN EN 52004 von 1.0 bis 1.2 g/cm³ auszeichnet.

Die Menge des für die Herstellung der erfindungsgemässen Elektrodenmasse eingesetzten Hartbitumens beträgt höchstens 35 Gew.-%, bevorzugt 15 bis 30 Gew.-%, bevorzugter 20 bis 25 Gew.-% bezogen auf die Elektrodenmasse.

Gemäss vorliegender Erfindung sind somit selbstkalzinierende Elektrodenmassen für Elektrolichtbogenöfen bevorzugt, die ein oder mehrere Kohlenstoffkomponenten und ein Bindemittel enthalten, dadurch gekennzeichnet, dass das Bindemittel ausschliesslich Hartbitumen mit einer Nadelpenetration bei 25°C nach DIN EN 1426 von < 50 [pro 0.1 mm] und/oder einem Erweichungspunkt (Ring und Kugel) nach DIN EN 1427 von mindestens 65°C, und/oder mit einer Dichte bei 25°C nach DIN EN 52004 von 0.5 - 2 g/cm³ ist bzw. einer oder mehrere der oben genannten bevorzugten Bereiche, und dass die Elektrodenmasse einen PAH (polyaromatic hydrocarbons, im Deutschen polyaromatische Kohlenwasserstoffe oder PAK) Gehalt von <500 ppm aufweisen.

Bevorzugt wird das Hartbitumen durch Flashdestillation von weichen und mittelharten Bitumensorten gewonnen.

Insbesondere bevorzugt für die vorliegende Anwendung ist Hartbitumen, das sich durch einen hohen Schwefelgehalt, vorzugsweise von 5-7% auszeichnet und aus einem Rohöl mit einem hohen Gehalt von organisch gebundenem Schwefel gewonnen wird. Neben dem Hartbitumen ist die erfindungsgemässe selbstkalzinierende Elektrodenmasse mit einer Trockenmischung bestehend aus einer oder mehreren Kohlenstoffkomponenten, bevorzugt Koks und/oder Anthrazit und/oder Graphit und optional Additiven wie beispielsweise Schwefel, CaF₂, CaO und Metalloxide wie Fe₂O₃, Al₂O₃ hergestellt.

Unter dem Begriff Koks versteht man jegliches herkömmliches, kommerziell erhältliches Koksprodukt, wie beispielsweise Petrol-, Nadel-, und Pechkoks, sowie aschearme metallurgische Kokse. Bevorzugt ist ein Koks mit einem Körnungsaufbau von 0 < x ≤ 50 zu wählen, bevorzugt 0.2-25 mm. In einer besonderen Ausführungsform ist der Koks in einer Menge von höchstens 60 Gew.-%, bezogen auf die Elektrodenmasse, enthalten. Bevorzugter ist der Koks in einer Menge von 30 bis 60 Gew.-%, vorzugsweise 35 bis 55 Gew.-%, bezogen auf die Elektrodenmasse, enthalten.

Unter dem Begriff Anthrazit versteht man vorzugsweise kalzinierten Anthrazit, insbesondere elektrisch kalzinierten oder gaskalzinierten Anthrazit. In einer bevorzugten Ausführungsform ist gaskalzinierter Anthrazit in einer Menge von höchstens 60 Gew.-%, bezogen auf die Elektrodenmasse, enthalten. Bevorzugter ist gaskalzinierter Anthrazit in einer Menge von 10 bis 40 Gew.-%, vorzugsweise 15 bis 35 Gew.-%, bezogen auf die Elektrodenmasse, enthalten. In einer anderen bevorzugten Ausführungsform ist elektrisch kalzinierter Anthrazit in einer Menge von höchstens 80 Gew.-%, bezogen auf die Elektrodenmasse enthalten. Bevorzugter ist elektrisch kalzinierter Anthrazit in einer Menge von 65 bis 80 Gew.-%, vorzugsweise 70 bis 75 Gew.-% bezogen auf die Elektrodenmasse, enthalten.

Unter dem Begriff Graphit versteht man insbesondere Graphitpulver bzw. Graphit der beispielsweise durch Brechen und Mahlen zerkleinert wurde. Ferner fallen unter den Begriff Graphit sowohl synthetische als auch natürliche Graphite. Die synthetischen Graphite können sowohl primär hergestellt oder auch aus recyceltem Graphit stammen. Unter recyceltem Graphit sind beispielsweise Elektrodenreste zu verstehen, welche für die Herstellung der Elektrodenmasse auf die gewünschte Korngrösse aufbereitet werden.

Vorzugsweise wird Graphit mit einer Partikelgrösse im Bereich von 0,01 µm [Mikrometer] bis 1 mm, bevorzugt im Bereich von 1 bis 300 µm [Mikrometer], am meisten bevorzugt im Bereich von 2 bis 20 µm [Mikrometer], verwendet.

Ferner liegt der Graphit auch in körniger Form vor. Ein bevorzugter Partikelgrössenbereich der Körner liegt zwischen 0< x ≤ 50, bevorzugt zwischen 0.2 - 25 mm.

In einer bevorzugten Ausführungsform ist Graphit in einer Menge von höchstens 25 Gew.-%, bezogen auf die Elektrodenmasse enthalten. Bevorzugter ist Graphit in einer Menge von 3 bis 12 Gew.-%, vorzugsweise 5 bis 10 Gew.-%, bezogen auf die Elektrodenmasse, enthalten.

Zur Herstellung dererfindungsgemässen Elektrodenmasse können die vorstehenden Komponenten verschiedene Korngrössen aufweisen. In einer bevorzugten Ausführungsform weisen die Komponenten Koks, Anthrazit (gaskalziniert oder elektrisch kalziniert) und Graphit eine Korngrösse zwischen 0< x ≤ 50, bevorzugt 0.2-25 mm auf.

Ferner weist dieses für die Erfindung geeignete Hartbitumen einen Koksrückstand von 25-45% auf.

In bestimmten Ausführungsformen, basierend auf gaskalziniertem Anthrazit enthalten die erfindungsgemässen selbstkalzinierenden Elektrodenmassen somit vorzugsweise
(i) 15-30 Gew.-%, vorzugsweise 20-25 Gew.-%, Hartbitumen und
(ii) 10-40 Gew.-% vorzugsweise 15-35 Gew.-%, gaskalzinierter Anthrazit,

Diese Mischungen können zusätzlich als dritte Komponente maximal 60 Gew.-%, insbesondere 30-60 Gew.-%, vorzugsweise 35-55 Gew.-%, Koks enthalten.

Als alternative dritte Komponente oder als vierte Komponente können diese Elektrodenmassen ferner noch maximal 15 Gew.-%, insbesondere 3-12 Gew.-% vorzugsweise 5-10 Gew.-% Graphit, enthalten.

In anderen Ausführungsformen basierend auf elektrisch kalziniertem Anthrazit, enthalten die erfindungsgemässen selbstkalzinierenden Elektrodenmassen vorzugsweise
(i) 20-35 Gew.-%, vorzugsweise 25-30 Gew.-%, Hartbitumen und
(ii) 65-80 Gew.-%, vorzugsweise 70-75 Gew.-% elektrisch kalzinierter Anthrazit.

Laboruntersuchungen haben gezeigt, dass bitumengebundene Elektrodenmassen nach einer Kalzination bei rund 1000 °C, verglichen mit steinkohleteerpechgebundenen Elektrodenmassen, geringere mechanische Eigenschaften hinsichtlich der Biegefestigkeit, der Druckfestigkeit und des statischen sowie dynamischen E-Moduls aufweisen. Ebenso hat sich gezeigt, dass die bitumengebundenen Elektrodenmassen über einen höheren elektrischen Widerstand und eine geringere Wärmeleitfähigkeit verfügen als die steinkohleteerpechgebundene Massen. Bei gewöhnlichen Betriebsbedingungen im Elektrolichtbogenofen treten bei der Phasenumwandlung von pastös auf gebackene Elektrodenmasse entsprechende mechanische Spannungen im Elektrodenkörper auf. Im Temperaturbereich zwischen 500°C und 1000°C kommt es zu einem Schrumpfen des Elektrodenkörpers während über 1000°C eine Ausdehnung zu verzeichnen ist. Die bitumengebundene Elektrodenmasse führt zu einem gebackenen Elektrodenkörper mit einer höheren Porosität als beispielsweise eine steinkohleteerpechgebundene Masse. Diese höhere Porosität des Elektrodenkörpers kann z.B. in vorteilhafter Weise dafür genutzt werden, um Gase, welche bei der Phasenumwandlung der Elektrodenmasse entstehen, abzuführen und die auftretenden mechanischen Spannungen zu minimieren.

Ein ebenso wichtiger Vorteil besteht darin, dass die erfindungsgemässen Elektrodenmassen aufgrund des verwendeten Bitumens überaus tiefe PAH-Gehalte, insbesondere < 500ppm, vorzugsweise < 100 ppm aufweisen und daher beim Einsatz im Elektrolichtbogenofen keine toxischen Dämpfe und Stäube entstehen.

In einer bevorzugten Ausführungsform der erfindungsgemässen Elektrodenmasse weist diese aufgrund des verwendeten Bitumens (das bevorzugt durch zweistufige Destillation erhalten wurde)einen PAH Gehalt von kleiner oder gleich 10 ppm, mehr bevorzugt kleiner oder gleich 5 ppm, am meisten bevorzugt kleiner oder gleich 1 ppm auf.

Das erfindungsgemäße Verfahren zur Herstellung von selbstkalzinierenden Elektrodenmassen enthält die Schritte Brechen, Mahlen und Klassifizieren der vorgesehenen Kohlenstoffkomponenten wie Koks, Anthrazit und/oder Graphit sowie optional weiteren Additiven in den vorgegebenen Mengen zu einer Trockenmischung, welche anschließend auf 120 bis 200°C, bevorzugt auf 160 - 180°C, vorgeheizt und vermischt wird. Das Bindemittel Bitumen wird für die Zugabe zur Trockenmischung auf mindestens 30 °C über dem Erweichungspunkt (Erweichungspunkt Ring und Kugel nach DIN EN 12591) erhitzt. Die Verarbeitung der Trockenmischung und Bitumenbinders erfolgt batchweise oder kontinuierlich in einem Mischer, beispielsweise einer temperierten, oszillierenden Misch-, und Knetschnecke bis die gewünschte Homogenität erreicht ist. Anschließend wird die erhaltene Mischung geformt und gekühlt, entweder in Briketts oder Zylindern, Blöcken.

In einer bestimmten Ausführungsform enthält das erfindungsgemässe Verfahren zur Herstellung einer selbstkalzinierenden Elektrodenmasse die Schritte (i) Mischen von ein oder mehrerer Kohlenstoffkomponenten, einem Bindemittel und optional Additiven, (ii) Formen der Mischung zu einer vorbestimmten Form, dadurch gekennzeichnet dass ausschliesslich Hartbitumen (gemäss obiger Ausführungsformen) als Bindemittel mit einer Nadelpenetration bei 25°C nach DIN EN 1426 von 50 [pro 0.1 mm], und/oder einem Erweichungspunkt (Ring und Kugel) nach DIN EN 1427 von mindestens 65°C, und/oder mit einer Dichte bei 25°C nach DIN EN 52004 von 0.5 bis 2 g/cm3 verwendet wird.

### WEGE ZUR AUSFÜHRUNG DER ERFINDUNG

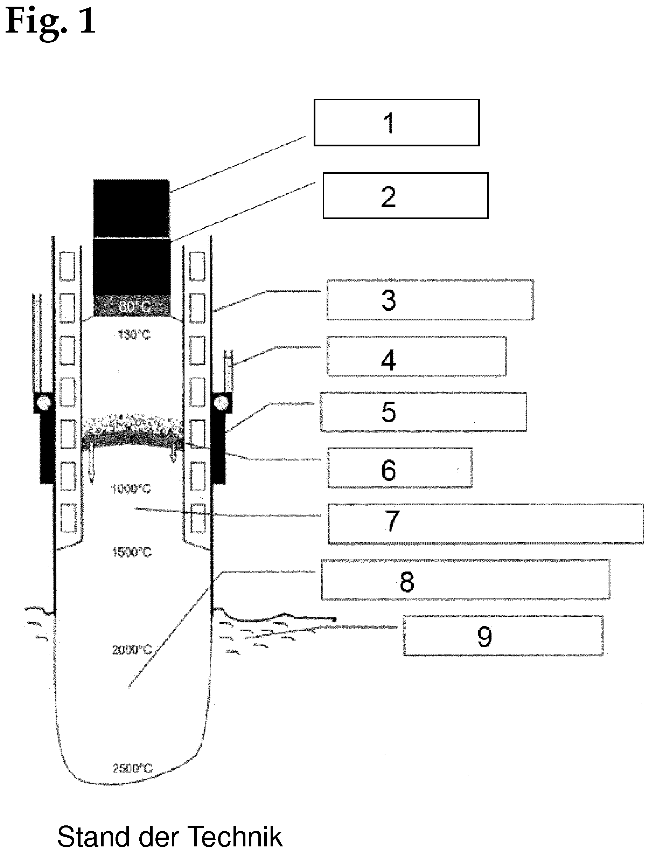

Fig. 1 zeigt stark vereinfacht eine selbstkalzinierende Söderbergelektrode für einen Elektrolichtbogenofen, in einer Schnittdarstellung nach dem Stand der Technik.

In Figur 1 dargestellt sind die Temperaturzonen einer selbstkalzinierenden Söderbergelektrode auf Basis eines konventionellen Steinkohleteerpechbinders. Die Elektrodenmasse 1 gepresst zu Briketts oder Zylindern wird einem zylindrischen Gehäuse 3 zugeführt und liegt in einer Zone 2, bei einer Temperatur von rund 80 °C, in fester Form vor. Auf der Aussenseite des Gehäuses befindet sich eine Stromzufuhr 4. Über den Kontaktbacken 5 wird der Elektrodenmasse elektrische Energie zugeführt. Als weitere Energiequelle dient die vom Schmelzgut 9 abgegebene thermische Energie. Durch den Energieeintrag erlangt die Elektrodenmasse bei etwa 130°C eine pastöse Konsistenz. In der Backzone 6, zwischen 500°C und 1000°C, entweichen die flüchtigen Anteile und die Elektrodenmasse geht in einen festen Zustand über. In Zone 7, zwischen 1000°C und 1 500°C liegt der Kohlenstoff in amorpher Form vor. In Zone 8, über 2000°C tritt die Graphitierung ein. Die noch nicht gebackene Elektrodenmasse, im Temperaturbereich zwischen 80°C und rund 500 °C ist elektrisch nichtleitend. Der Energieeintrag erfolgt elektrisch über den elektrischen Widerstand der Elektrodenmasse. Ab rund 500 °C sinkt der elektrische Widerstand der Elektrodenmasse und diese wird elektrisch leitend. An der Elektrodenspitze wird die graphitierte Elektrode 8 von einem Plasma oder Lichtbogen umgeben (in Figur 1 nicht sichtbar).

Unter Anwendung des für die Erfindung geeigneten Bitumens gelingt die Graphitierung der Elektrode bereits unterhalb der Kontaktbacken.

### Beispiel 1: "Elektrodenmasse Anthrazit (gaskalziniert)"

Ein erstes Bespiel für eine selbstkalzinierende Elektrodenmasse für Elektrolichtbogenöfen hat folgende Komponenten: 22% Bitumen als Binder; 28 % Koks in Form von Koksstaub mit einer Korngrössenfraktion von 0 < x ≤ 0.21 mm; 2% Graphit in Form von Graphitstaub. Koksstaub und Graphitstaub weisen eine spezifische Oberfläche nach Blaine von 4500-6000 Blaine auf; 11 % einer Mischung aus gaskalziniertem Anthrazit mit Koks im Mischungsverhältnis gaskalzinierter Anthrazit: Koks = 3:1 mit einer Feinkornfraktion von 0< x ≤ 0.84 mm; 15 % einer Mischung aus gaskalziniertem Anthrazit mit Koks im Mischungsverhältnis gaskalzinierter Anthrazit: Koks = 3:1 mit einer Mittelkornfraktion von 0.84-3.36 mm; 17 % einer Mischung aus gaskalziniertem Anthrazit mit Koks im Mischungsverhältnis gaskalzinierter Anthrazit: Koks = 3:1 mit einer Grobkornfraktion von 3,36 -20 mm und 5 % Graphit mit einer Kornfraktion zwischen 1 und 25 mm.

Bei der Herstellung der selbstkalzinierenden Elektrodenmasse, werden die vorgängig genannten Komponenten sowie optional weitere Additive, gebrochen, gemahlen und klassifiziert. Die erhaltene Trockenmischung wird anschliessend auf 120 bis 200°C, bevorzugt auf 160 - 180°C, besonders bevorzugt auf 175°C, vorgeheizt und bei dieser Temperaturvermischt.

Das Bindemittel Bitumen wird für die Zugabe zur Trockenmischung auf 65°C über dem Erweichungspunkt (Erweichungspunkt Ring und Kugel nach DIN EN 12591) erhitzt. Die Verarbeitung der Trockenmischung und Bitumenbinders erfolgt batchweise oder kontinuierlich in einem Mischer, beispielsweise einer temperierten, oszillierenden Misch-, und Knetschnecke, bis die gewünschte Homogenität erreicht ist. Anschließend wird die erhaltene Mischung geformt und gekühlt, entweder in Briketts oder Zylindern, Blöcken.

### Beispiel 2: "Elektrodenmasse Koks"

Ein zweites Beispiel für eine selbstkalzinierende Elektrodenmasse für Elektrolichtbogenöfen hat folgende Komponenten: 24% Bitumen als Binder; 28% Koks in Form von Koksstaub mit einer Korngrössenfraktion von 0< x ≤ 0.21 mm; 3 % Graphit in Form von Graphitstaub. Koksstaub und Graphitstaub weisen eine spezifische Oberfläche nach Blaine von 4500-6000 Blaine auf; 8% Koks mit einer Feinkornfraktion von 0< x ≤ 0.84 mm; 17% Koks mit einer Mittelkornfraktion von 0.84 -3.36 mm; 15% gaskalzinierter Anthrazit mit einer Grobkornfraktion von 3.36 - 20 mm; 5% Graphit mit einer Kornfraktion von 1-25 mm.

Die vorgängig aufgezählten Komponenten werden bei einer Mischungstemperatur von 175°C vermischt.

Bei der Herstellung der selbstkalzinierenden Elektrodenmasse, werden die vorgängig genannten Komponenten sowie optional weitere Additive, gebrochen, gemahlen und klassifiziert. Die erhaltene Trockenmischung wird anschliessend auf 120 bis 200°C, bevorzugt auf 160 - 180°C, besonders bevorzugt auf 175°C vorgeheizt und bei dieser Temperatur vermischt.

Das Bindemittel Bitumen wird für die Zugabe zur Trockenmischung auf 65°C über dem Erweichungspunkt (Erweichungspunkt Ring und Kugel nach DIN EN 12591) erhitzt. Die Verarbeitung der Trockenmischung und Bitumenbinders erfolgt batchweise oder kontinuierlich in einem Mischer, beispielsweise einer temperierten, oszillierenden Misch-, und Knetschnecke, bis die gewünschte Homogenität erreicht ist. Anschließend wird die erhaltene Mischung geformt und gekühlt, entweder in Briketts, Zylindern oder Blöcken.

### Beispiel 3: Elektrodenmasse ECA (elektrisch kalzinierter Anthrazit)

Ein drittes Beispiel einer selbstkalzinierende Elektrodenmasse für Elektrolichtbogenöfen hat folgende Komponenten: 26% Bitumen als Binder, 35% elektrisch kalzinierter Anthrazit in Form von Anthrazitstaub mit einer Korngrössenfraktion von 0 < x ≤ 0.21 mm und einer spezifischen Oberfläche nach Blaine von 4500-6000 Blaine; 5% elektrisch kalzinierter Anthrazit mit einer Feinkornfraktion von 0 < x ≤ 0.84 mm; 5% elektrisch kalzinierter Anthrazit mit einer Mittelkornfraktion von 0.84 - 3.36 mm und 29% elektrisch kalzinierter Anthrazit mit einer Grobkornfraktion von 3.36 - 20 mm.

Gegenüberstellung typischer Kennwerte einer Elektrodenmasse mit Steinkohleteepech als Bindemittel und einer bitumengebundenen Elektrodenmasse nach der Kalzination bei 1000 °C (Laborversuch) gemäss dem vorgängigen zweiten Beispiel:

| Eigenschaften | Elektroden-masse (Bitumen) | Elektroden-masse (Pech) | Einheit | Norm |
|---|---|---|---|---|
| Kalzinierte Dichte | 1,40 | 1,49 | g/cm³ | ISO 12985-1 |
| Elektrischer Widerstand | 105 | 70 | µΩm) | DIN 51911 |
| Biegefestigkeit | 3 | 6 | MPa | ISO 51902 |
| E-Modul(statisch) | 0,7 | 1,2 | GPa | Rheinfelden Methode |
| E-Modul(dynamisch) | 2,9 | 6,5 | GPa | Rheinfelden Methode |
| Druckfestigkeit | 13 | 25 | MPa | ISO 18515 |
| Thermische Leitfähigkeit | 2,2 | 2,6 | W/mK | Hot Disk Methode |
| Aschegehalt | 2,5 | 2,5 | % | ISO 8005 |
| Benzo[a]pyren | 0,01 | 3000 | ppm | DIN EN ISO 17993 |
| EPA 16 PAK | 0,1 | 25000 | ppm | DIN EN ISO 17993 |

Nachfolgend werden Versuche aus der Praxis (Probenentnahme aus einem Elektrolichtbogenofen zur Herstellung von Ferrosilizium) erläutert. In diesen praktischen Versuchen wurde eine Elektrodenmasse gemäss dem vorgängig erläuterten zweiten Beispiel eingesetzt, zu welcher auch der Laborversuch durchgeführt wurde.

Unter Anwendung des für die Erfindung geeigneten Bitumens resultiert eine gebackene Elektrode, welche die nachfolgend aufgelisteten Materialkennwerte zeigt. Bei den gemessenen Proben handelt es sich um zylindrische Probenkörper aus der gebackenen Elektrode. Diese stammen aus einem Elektrolichtbogenofen für die Herstellung von Ferrosilizium und wurden 20 cm unterhalb der Kontaktbacken entnommen. In der nachfolgenden Tabelle sind Analysenwerte dieser bitumengebundenen Elektrode im Vergleich zu einer Steinkohlenteerpechgebundenen Elektrode dargestellt.

| Eigenschaften | Elektrode 1 (Bitumen) | Elektrode 2 (Pech) | Einheit | Norm |
|---|---|---|---|---|
| Kalzinierte Dichte | 1,42 | 1,59 | g/cm³ | ISO 12985-1 |
| Elektrischer Widerstand | 35 | 47 | µΩm | DIN 51911 |
| Biegefestigkeit | 3,2 | 7,5 | MPa | ISO 51902 |
| E-Modul | 2,8 | 5,8 | GPa | Rheinfelden Methode |
| Druckfestigkeit | 10 | 28 | MPa | ISO18515 |
| Thermische Leitfähigkeit | 31 | 16 | W/mK | Hot Disk Methode |

Die Unterschiede zwischen den Laborwerten und den aus dem Produktionsbetrieb stammenden Werten sind besonders beim elektrischen Widerstand signifikant und belegen das gute Backverhalten der bitumengebundenen Elektrode, die Verbesserung der elastischen Verformbarkeit sowie eine leichte Graphitierung der Elektrode.

## Patentansprüche

1. Selbstkalzinierende Elektrodenmasse für Elektrolichtbogenöfen, enthaltend ein oder mehrere Kohlenstoffkomponenten und ein Bindemittel, **dadurch gekennzeichnet, dass** das Bindemittel ausschliesslich Hartbitumen mit einer Nadelpenetration bei 25°C nach DIN EN 1426 von < 50 pro 0.1 mm, und/oder einem Erweichungspunkt Ring und Kugel nach DIN EN 1427 von mindestens 65°C, und/oder mit einer Dichte bei 25°C nach DIN EN 52004 von 0.5 bis 2 g/cm³ ist, und dass die Elektrodenmasse einen polyaromatische Kohlenwasserstoffe oder PAK Gehalt von < 500 ppm aufweist.

2. Selbstkalzinierende Elektrodenmasse gemäss Anspruch 1, **dadurch gekennzeichnet, dass** das Hartbitumen durch Flashdestillation von weichen und mittelharten Bitumensorten gewonnen wird.

3. Selbstkalzinierende Elektrodenmasse gemäss Ansprüchen 1 oder 2, **dadurch gekennzeichnet, dass** das Hartbitumen einen hohen Schwefelgehalt vorzugsweise einen Gehalt von 5-7% aufweist und aus Rohöl mit einem hohen Gehalt von organisch gebundenem Schwefel gewonnen wird.

4. Selbstkalzinierende Elektrodenmasse gemäss einem der vorangegangenen Ansprüche, **dadurch gekennzeichnet, dass** die Elektrodenmasse einen PAK Gehalt kleiner oder gleich 10 ppm aufweist.

5. Selbstkalzinierende Elektrodenmasse gemäss einem der vorangegangenen Ansprüche, **dadurch gekennzeichnet, dass** die Elektrodenmasse einen PAK Gehalt kleiner oder gleich 5 ppm aufweist.

6. Selbstkalzinierende Elektrodenmasse gemäss einem der vorangegangenen Ansprüche, **dadurch gekennzeichnet, dass** die Elektrodenmasse einen PAK Gehalt von kleiner oder gleich 1 ppm aufweist.

7. Selbstkalzinierende Elektrodenmasse gemäss einem der vorangehenden Ansprüche, **dadurch gekennzeichnet, dass** das Hartbitumen in einer Menge von höchstens 35 Gew.-%, bevorzugt 15 bis 30 Gew.-% bezogen auf die Elektrodenmasse enthalten ist.

8. Selbstkalzinierende Elektrodenmasse gemäss einem der vorangehenden Ansprüche, **dadurch gekennzeichnet, dass** die ein oder mehreren Kohlenstoffkomponenten ausgewählt sind aus Anthrazit, bevorzugt gaskalzinierter oder elektrisch kalzinierter Anthrazit, Koks und Graphit.

9. Selbstkalzinierende Elektrodenmasse gemäss Anspruch 5, **dadurch gekennzeichnet, dass** Anthrazit (a) als gaskalzinierter Anthrazit in einer Menge von höchstens 60 Gew.-%, bevorzugt 10 bis 40 Gew.-% bezogen auf die Elektrodenmasse enthalten ist oder (b) als elektrisch kalzinierter Anthrazit in einer Menge von höchstens 80 Gew.-%, bevorzugt 65 bis 80 Gew.-% bezogen auf die Elektrodenmasse enthalten ist.

10. Selbstkalzinierende Elektrodenmasse gemäss Anspruch 5, **dadurch gekennzeichnet, dass** Koks in einer Menge von höchstens 60 Gew.-%, bevorzugt 30 bis 60 Gew.-% bezogen auf die Elektrodenmasse enthalten ist.

11. Selbstkalzinierende Elektrodenmasse gemäss Anspruch 5, **dadurch gekennzeichnet, dass** Graphit in einer Menge von höchstens 15 Gew.-%, bevorzugt 3 bis 12 Gew.-% bezogen auf die Elektrodenmasse enthalten ist.

12. Gebackene Elektrode erhalten durch Backen einer Elektrodenmasse gemäss einem der vorangehenden Ansprüche.

13. Verfahren zur Herstellung einer selbstkalzinierenden Elektrodenmasse, enthaltend die Schritte Mischen von ein oder mehreren Kohlenstoffkomponenten, einem Bindemittel und optional Additiven, Formen der Mischung zu einer vorbestimmten Form, **dadurch gekennzeichnet, dass** ausschliesslich Hartbitumen als Bindemittel mit einer Nadelpenetration bei 25°C nach DIN EN 1426 von 50 pro 0.1 mm, und/oder einem Erweichungspunkt Ring und Kugel nach DIN EN 1427 von mindestens 65°C, und/oder mit einer Dichte bei 25°C nach DIN EN 52004 von 0.5 bis 2 g/cm3 verwendet wird.

14. Verfahren gemäss Anspruch 13, **dadurch gekennzeichnet, dass** das Hartbitumen durch Flashdestillation von weichen und mittelharten Bitumensorten gewonnen wird.

15. Verfahren gemäss Ansprüchen 13 oder 14, **dadurch gekennzeichnet, dass** das Hartbitumen einen hohen Schwefelgehalt vorzugsweise einen Gehalt von 5-7% aufweist, und aus Rohöl mit einem hohen Gehalt von organisch gebundenem Schwefel gewonnen wird.

16. Verfahren gemäss einem der Ansprüche 13 bis 15, **dadurch gekennzeichnet, dass** das Hartbitumen in einer Menge von höchstens 35 Gew.-%, bevorzugt 15 bis 30 Gew.-% bezogen auf die Elektrodenmasse enthalten ist.

17. Verfahren gemäss einem der Ansprüche 13 bis 16, **dadurch gekennzeichnet, dass** die ein oder mehreren Kohlenstoffkomponenten ausgewählt sind aus Anthrazit, bevorzugt gaskalzinierter oder elektrisch kalzinierter Anthrazit, Koks und Graphit.

18. Verfahren gemäss einem der Ansprüche13 bis 17, **dadurch gekennzeichnet, dass** Koks in einer Menge von höchstens 60 Gew.-%, bevorzugt 30 bis 60 Gew.-% bezogen auf die Elektrodenmasse enthalten ist.

19. Verfahren gemäss einem der Ansprüche 13 bis 18, **dadurch gekennzeichnet, dass** Graphit in einer Menge von höchstens 25 Gew.-%, bevorzugt 3 bis 12 Gew.-% bezogen auf die Elektrodenmasse enthalten ist.

## Claims

1. A self-calcining electrode composition for electric arc furnaces, containing one or more carbon components and a binder, **characterized in that** the binder contains exclusively hard bitumen with a needle penetration of <50 per 0.1 mm at 25°C according to DIN EN 1426, and/or a softening point, ring and ball, of at least 65°C according to DIN EN 1427 and/or with a density of 0.5 to 2 g/cm³ at 25°C according to DIN EN 52004, and **in that** the electrode composition has a polyaromatic hydrocarbon (PAC) content of <500 ppm.

2. The self-calcining electrode composition according to claim 1, **characterized in that** the hard bitumen is obtained by flash distillation of soft and medium-hard bitumen varieties.

3. The self-calcining electrode composition according to claims 1 or 2, **characterized in that** the hard bitumen has a high sulfur content of preferably 5-7% and is obtained from crude oil with a containing a large amount of organically bound sulfur.

4. The self-calcining electrode composition according to any one of the preceding claims, **characterized in that** the electrode composition has a PAC content less than or equal to 10 ppm.

5. The self-calcining electrode composition according to any one of the preceding claims, **characterized in that** the electrode composition has a PAC content less than or equal to 5 ppm.

6. The self-calcining electrode composition according to any one of the preceding claims, **characterized in that** the electrode composition has a PAC content of less than or equal to 1 ppm.

7. The self-calcining electrode composition according to any one of the preceding claims, **characterized in that** the hard bitumen is present in an amount of at most 35% by weight, preferably 15% to 30% by weight, based on the electrode composition.

8. The self-calcining electrode composition according to any one of the preceding claims, **characterized in that** the one or more carbon components are selected from anthracite, preferably gas-calcined or electrically calcined anthracite, coke and graphite.

9. The self-calcining electrode composition according to claim 5, **characterized in that** anthracite (a) is present as gas-calcined anthracite in an amount of at most 60% by weight, preferably 10% to 40% by weight, based on the electrode composition, or (b) is present as electrically calcined anthracite in an amount of at most 80% by weight, preferably 65% to 80% by weight, based on the electrode composition.

10. The self-calcining electrode composition according to claim 5, **characterized in that** coke is present in an amount of at most 60% by weight, preferably 30% to 60% by weight, based on the electrode composition.

11. The self-calcining electrode composition according to claim 5, **characterized in that** graphite is present in an amount of at most 15% by weight, preferably 3% to 12% by weight, based on the electrode composition.

12. A baked electrode obtained by baking an electrode composition according to any one of the preceding claims.

13. A method for producing a self-calcining electrode composition, comprising the steps of mixing one or more carbon components, a binder and optionally additives, shaping the mixture into a predetermined shape, **characterized in that** exclusively hard bitumen is used as the binder with a needle penetration of 50 per 0.1 mm at 25°C according to DIN EN 1426 and/or a softening point, ring and ball, of at least 65°C according to DIN EN 1427 and/or with a density of 0.5 to 2 g/cm³ at 25°C according to DIN EN 52004.

14. The method according to claim 13, **characterized in that** the hard bitumen is obtained by flash distillation of soft and medium-hard bitumen varieties.

15. The method according to claims 13 or 14, **characterized in that** the hard bitumen has a high sulfur content, preferably a content of 5-7% and is obtained from crude oil containing a large amount of organically bound sulfur.

16. The method according to any one of claims 13 to 15, **characterized in that** the hard bitumen is present in an amount of at most 35% by weight, preferably 15% to 30% by weight, based on the electrode composition.

17. The method according to any one of claims 13 to 16, **characterized in that** the one or more carbon components are selected from anthracite, preferably gas-calcined or electrically calcined anthracite, coke and graphite.

18. The method according to any one of claims 13 to 17, **characterized in that** coke is present in an amount of at most 60% by weight, preferably 30% to 60% by weight, based on the electrode composition.

19. The method according to any one of claims 13 to 18, **characterized in that** graphite is present in an amount of at most 25% by weight, preferably 3% to 12% by weight, based on the electrode composition.

## Revendications

1. Composition autocalcinante pour électrodes pour des fours à arc électrique, contenant un ou plusieurs composants au carbone et un liant, **caractérisée en ce que** le liant est exclusivement du bitume dur avec une pénétration à l'aiguille à 25°C selon la DIN NE 1426 de < 50 pour 0,1 mm et/ou un point de ramollissement bille et anneau selon la DIN NE 1427 d'au moins 65°C et/ou avec une densité à 25°C selon la DIN NE 52004 de 0,5 à 2 g/cm³, et **en ce que** la composition pour électrodes comporte une teneur en hydrocarbures polyaromatiques ou HCP de < 500 ppm.

2. Composition autocalcinante pour électrodes selon la revendication 1, **caractérisée en ce que** le bitume dur est obtenu par distillation par détente de sortes de bitumes mous et moyennement durs.

3. Composition autocalcinante pour électrodes selon les revendications 1 ou 2, **caractérisée en ce que** le bitume dur comporte une teneur en soufre élevée, de préférence une teneur de 5-7 % et est obtenu à partir de pétrole brut avec une teneur élevée en soufre lié organiquement.

4. Composition autocalcinante pour électrodes selon l'une quelconque des revendications précédentes, **caractérisée en ce que** la composition pour électrodes comporte une teneur en hydrocarbures polyaromatiques (HCP) plus faible ou égale à 10 ppm.

5. Composition autocalcinante pour électrodes selon l'une quelconque des revendications précédentes, **caractérisée en ce que** la composition pour électrodes comporte une teneur en hydrocarbures polyaromatiques (HCP) plus faible ou égale à 5 ppm.

6. Composition autocalcinante pour électrodes selon l'une quelconque des revendications précédentes, **caractérisée en ce que** la composition pour électrodes comporte une teneur en hydrocarbure polyaromatiques (HCP) plus faible ou égale à 1 ppm.

7. Composition autocalcinante pour électrodes selon l'une quelconque des revendications précédentes, **caractérisée en ce que** le bitume dur est contenu dans une quantité maximum de 35 %/poids, de préférence de 15 à 30 %/poids par rapport à la composition pour électrodes.

8. Composition autocalcinante pour électrodes selon l'une quelconque des revendications précédentes, **caractérisée en ce qu'**un ou plusieurs composants carbonés sont choisis à partir de l'anthracite, de préférence de l'anthracite calciné au gaz ou calciné électriquement, du coke et du graphite.

9. Composition autocalcinante pour électrodes selon la revendication 5, **caractérisée en ce que** l'anthracite (a) est contenu en tant qu'anthracite calciné au gaz dans une quantité maximum de 60 %/poids, de préférence 10 à 40 %/poids par rapport à la composition pour électrodes ou (b) en tant qu'anthracite calciné électriquement dans une quantité maximum de 80 %/poids, de préférence 65 à 80 %/poids par rapport à la composition pour électrodes.

10. Composition autocalcinante pour électrodes selon la revendication 5, **caractérisée en ce que** le coke est contenu dans une quantité maximum de 60 %/poids, de préférence 30 à 60 %/poids par rapport à la composition pour électrodes.

11. Composition autocalcinante pour électrodes selon la revendication 5, **caractérisée en ce que** le graphite est contenu dans une quantité maximum de 15 %/poids, de préférence 3 à 12 %/poids par rapport à la composition pour électrodes.

12. Electrode cuite obtenue par cuisson d'une composition pour électrodes selon l'une quelconque des revendications précédentes.

13. Procédé de fabrication d'une composition autocalcinante pour électrodes contenant les étapes de mélange d'un ou plusieurs composants carbonés, d'un liant et en option d'additifs, de moulage du mélange en une forme prédéfinie, **caractérisé en ce que** du bitume dur est exclusivement utilisé comme liant avec une pénétration à l'aiguille à 25°C selon la DIN NE 1426 de 50 pour 0,1 mm et/ou un point de ramollissement bille et anneau selon la DIN NE 1427 d'au moins 65°C et/ou avec une densité à 25°C selon la DIN NE 52004 de 0,5 à 2 g/cm³.

14. Procédé selon la revendication 13, **caractérisé en ce que** le bitume dur est obtenu par distillation par détente de sortes de bitumes mous ou moyennement durs.

15. Procédé selon les revendications 13 ou 14, **caractérisé en ce que** le bitume dur comporte une teneur en soufre élevée, de préférence une teneur de 5-7 % et est obtenu à partir de pétrole brut avec une teneur élevée en soufre lié organiquement.

16. Procédé selon l'une quelconque des revendications 13 à 15, **caractérisé en ce que** le bitume dur est contenu dans une quantité maximum de 35 %/poids, de préférence 15 à 30 %/poids par rapport à la composition pour électrodes.

17. Procédé selon l'une quelconque des revendications 13 à 16, **caractérisé en ce qu'**un ou plusieurs composants carbonés sont choisis à partir de l'anthracite, de préférence de l'anthracite calciné au gaz ou calciné électriquement, du coke et du graphite.

18. Procédé selon l'une quelconque des revendications 13 à 17, **caractérisé en ce que** le coke est contenu dans une quantité maximum de 60 %/poids, de préférence 30 à 60 %/poids par rapport à la composition pour électrodes.

19. Procédé selon l'une quelconque des revendications 13 à 18, **caractérisé en ce que** du graphite est contenu dans une quantité maximum de 25 %/poids, de préférence 3 à 12 %/poids par rapport à la composition pour électrodes.
